# EUROPEAN PATENT APPLICATION

(11) **EP 3 700 201 A1**
(43) Date of publication of application: **26.08.2020**
(21) Application number: 19305209.9
(22) Date of filing: 21.02.2019
(51) Int. Cl.: H04N 19/103, H04N 19/119, H04N 19/186, H04N 19/50, H04N 19/70, H04N 19/157

(54) **SEPARATE CODING TREES FOR LUMA AND CHROMA PREDICTION**

(71) Applicant: InterDigital VC Holdings, Inc., Wilmington, DE 19809 (US)
(72) Inventor: LELEANNEC, Fabrice, 35576 Cesson-Sévigné (FR); POIRIER, Tangi, 35576 Cesson-Sévigné (FR); URBAN, Fabrice, 35576 Cesson-Sévigné (FR)
(74) Representative: Huchet, Anne

(57) **Abstract**

At least a method and an apparatus are presented for efficiently encoding or decoding video. For example, chroma component is partitioned separately from luma component. A collocated luma block of the luma component that corresponds to a chroma block of the chroma component is partitioned into multiple luma sub-blocks. A mode used to encode or decode the chroma block is selected from a list of modes, wherein the list of modes includes 1) one or more respective intra prediction modes of one or more sub-blocks of a first subset of sub-blocks of the collocated luma block, and 2) one or more respective inter modes of the one or more sub-blocks of a second set of sub-blocks of the collocated luma block. The chroma block is encoded or decoded based on the selected mode.

## Description

### TECHNICAL FIELD

The present embodiments generally relate to a method and an apparatus for video encoding or decoding, and more particularly, to a method and an apparatus for efficiently encoding and decoding of video using separate coding trees for luma and chroma components.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### SUMMARY

According to an embodiment, a method for video encoding is presented, comprising: partitioning a chroma component of a picture separately from a luma component of the picture; partitioning a collocated luma block of the luma component that corresponds to a chroma block of the chroma component into multiple luma sub-blocks; selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and encoding the chroma block based on the selected mode.

According to another embodiment, a method for video decoding is presented, comprising: partitioning a chroma component of a picture separately from a luma component of the picture; partitioning a collocated luma block of the luma component that corresponds to a chroma block of the chroma component into multiple luma sub-blocks; selecting a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and decoding the chroma block based on the selected mode.

According to another embodiment, an apparatus for video encoding is presented, comprising: means for partitioning a chroma component of a picture separately from a luma component of the picture; means for partitioning a collocated luma block of the luma component that corresponds to a chroma block of the chroma component into multiple luma sub-blocks; means for selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and means for encoding the chroma block based on the selected mode.

According to another embodiment, an apparatus for video decoding is presented, comprising: means for partitioning a chroma component of a picture separately from a luma component of the picture; means for partitioning a collocated luma block of the luma component that corresponds to a chroma block of the chroma component into multiple luma sub-blocks; means for selecting a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and means for decoding the chroma block based on the selected mode.

According to another embodiment, an apparatus for video encoding is presented, comprising one or more processors, wherein said one or more processors are configured to: partition a chroma component of a picture separately from a luma component of the picture; partition a collocated luma block of the luma component that corresponds to a chroma block of the chroma component into multiple luma sub-blocks; select a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks the collocated luma block; and encode the chroma block based on the selected motion prediction mode.

According to another embodiment, an apparatus for video decoding is presented, comprising one or more processors, wherein said one or more processors are configured to: partition a chroma component of a picture separately from a luma component of the picture; partition a collocated luma block of the luma component that corresponds to a chroma block of the chroma component into multiple luma sub-blocks; select a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and decode the chroma block based on the selected mode.

According to another embodiment, a signal comprising encoded video is formed by performing: partitioning a chroma component of a picture separately from a luma component of the picture; partitioning a collocated luma block of the luma component that corresponds to a chroma block of the chroma component into multiple luma sub-blocks; selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and encoding the chroma block based on the selected mode.

### BRIEF DESCRIPTION OF THE DRAWINGS

FIG. 1 illustrates a block diagram of an embodiment of a video encoder.
FIG. 2 illustrates a block diagram of an embodiment of a video decoder.
FIG. 3 is a pictorial example illustrating Coding Tree Unit and Coding Tree concepts to represent a compressed HEVC picture.
FIG. 4 is a pictorial example illustrating a division of a Coding Tree Unit into Coding Units, Prediction Units and Transform Units.
FIG. 5 is a pictorial example illustrating Quad-Tree Plus Binary-Tree (QTBT) CTU representation adopted in VTM-1.
FIG. 6 is a pictorial example illustrating a luma QTBT structure with a separate corresponding chroma QTBT structure.
FIG. 7 is a pictorial example illustrating a separated shared partitioning (SST) for luma and chroma.
FIG. 8 is a pictorial example illustrating a new prediction mode, Cross Component Motion Vector Prediction (CCMVP) mode.
FIG. 9 is a pictorial example illustrating a new chroma mode for direct modes, where direct modes from intra or inter luma modes may be added.
FIG. 10 is a pictorial example illustrating a luma block having the corresponding sub-blocks and prediction modes to be used in a direct mode for a corresponding chroma block.
FIG. 11 illustrate a method for parsing a chroma coding unit, according to an embodiment.
FIG. 12 illustrate a method for encoding a chroma coding unit, according to an embodiment.
FIG. 13 illustrates a block diagram of a system within which aspects of the present embodiments may be implemented.

### DETAILED DESCRIPTION

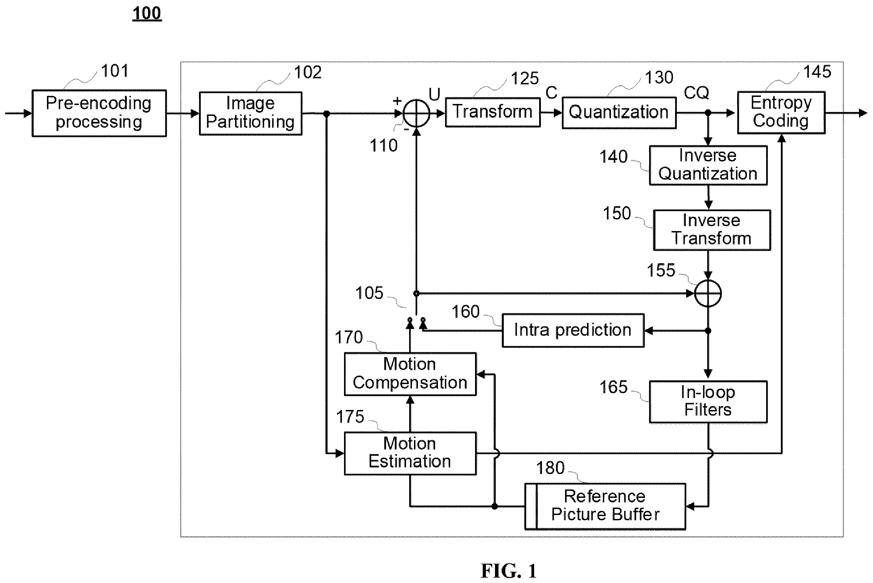

FIG. 1 illustrates an example video encoder 100, such as a High Efficiency Video Coding (HEVC) encoder. FIG. 1 may also illustrate an encoder in which improvements are made to the HEVC standard or an encoder employing technologies similar to HEVC, such as a VVC (Versatile Video Coding) encoder under development by JVET (Joint Video Exploration Team).

In the present application, the terms "reconstructed" and "decoded" may be used interchangeably, the terms "encoded" or "coded" may be used interchangeably, and the terms "image", "picture" and "frame" may be used interchangeably. Usually, but not necessarily, the term "reconstructed" is used at the encoder side while "decoded" is used at the decoder side.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the preprocessing, and attached to the bitstream.

In HEVC, to encode a video sequence with one or more pictures, a picture is partitioned (102) into one or more slices where each slice may include one or more slice segments. A slice segment is organized into coding units, prediction units, and transform units. The HEVC specification distinguishes between "blocks" and "units," where a "block" addresses a specific area in a sample array (e.g., luma, Y), and the "unit" includes the collocated blocks of all encoded color components (e.g., Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" may be used to refer, for example, to any of CTU, CU, PU, TU, CB, PB, and TB. In addition, the "block" may also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

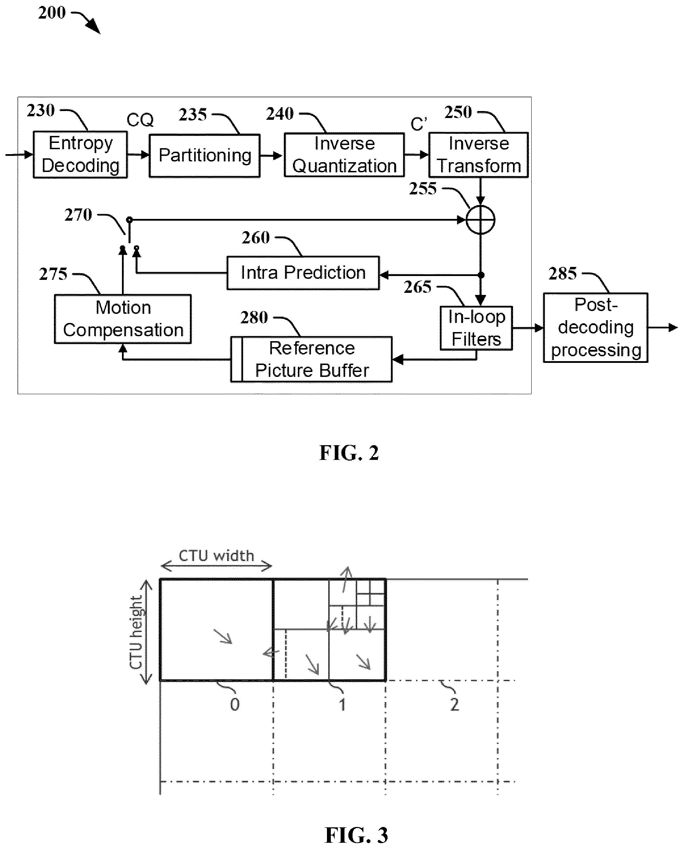

FIG. 2 illustrates a block diagram of an example video decoder 200, such as an HEVC decoder. In decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a VVC decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) and inverse transformed (250) to decode the prediction residuals.

Combining (255) the decoded prediction residuals and the predicted block, an image block is reconstructed. The predicted block may be obtained (270) from intra prediction (260) or motion-compensated prediction (i.e., inter prediction) (275). In case of bi-prediction, two motion compensated predictions may be combined with a weighted sum. In-loop filters (265) are applied to the reconstructed image. The filtered image is stored at a reference picture buffer (280).

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

The present disclosure is in the field of video compression and decompression. It aims at improving coding efficiency in inter slices compared to existing video compression systems, such as HEVC and VTM-1 (see "Algorithm description for Versatile Video Coding and Test Model 1 (VTM 1)", J. Chen, E. Alshina, document JVET-J1002, Joint Video Experts Team (JVET) of ITU-T SG 16 WP 3 and ISO/IEC JTC 1/SC 29/WG 11 10th Meeting: San Diego, US, 10-20 Apr. 2018.). The present disclosure proposes to separate luma and chroma coding trees for inter slices.

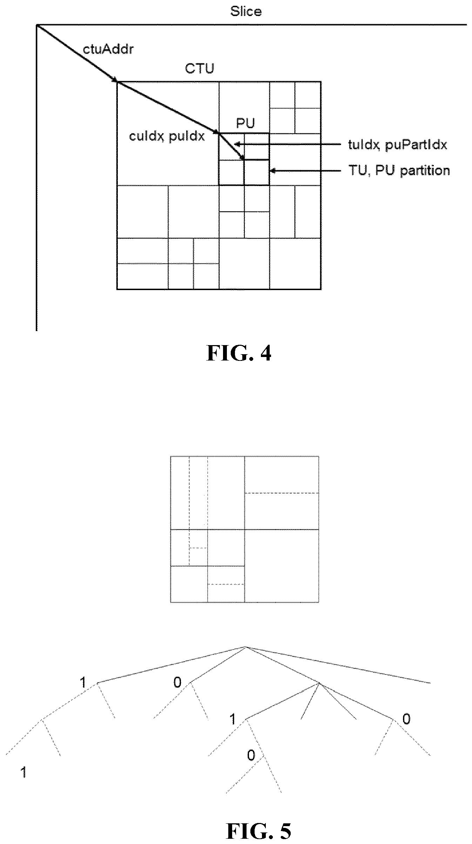

In the HEVC video compression standard, a picture is divided into so-called Coding Tree Units (CTU), whose size is typically 64x64, 128x128, or 256x256 pixels. Each CTU is represented by a Coding Tree in the compressed domain. This is a quad-tree division of the CTU, where each leaf is called a Coding Unit (CU), as illustrated in FIG. 3. Each CU is then given some intra or inter prediction parameters (e.g., Prediction Info). To do so, it is spatially partitioned into one or more Prediction Units (PUs), each PU being assigned some prediction information. The intra or inter coding mode is assigned on the CU level, as illustrated in FIG. 4.

New emerging video compression tools in VTM-1 including a Coding Tree Unit representation in the compressed domain is proposed, in order to represent picture data in a more flexible way in the compressed domain. The advantage of this more flexible representation of the coding tree is that it provides increased compression efficiency compared to the CU/PU/TU arrangement of the HEVC standard.

For example, the Quad-Tree plus Binary-Tree (QTBT) coding tool in VTM-1 provides some increased flexibility. It consists in a coding tree where coding units can be split both in a quad-tree and in a binary-tree fashion. Such coding tree representation of a Coding Tree Unit is illustrated in FIG. 5.

The splitting of a coding unit is decided on the encoder side through a rate distortion optimization procedure, which determines the QTBT representation of the CTU with the minimal rate distortion cost. In the QTBT technology, a CU has either square or rectangular shape. The size of coding unit is always a power of 2, and typically goes from 4 to 128. In BMS (Benchmark Set) 2.0.1, dual tree for luma/chroma can only be used for intra slices.

At least one problem solved by this application is how to separate the coding tree between luma and chroma components in inter slices, in a way that makes the coding efficiency as high as possible in inter slices, and that provides a simple codec design, particularly in cases where several luma Coding Units may be co-located with a given chroma coding unit.

When Current Picture Referencing (CPR, also called intra block copy) is enabled, an intra slice becomes a P slice, and the current picture is added in the list of reference pictures. In BMS2.1, dual tree is enabled in P slices, when the current picture is the only reference frame available but is disabled otherwise. Therefore, the design is not unified for inter slices between P slice with the current reference frame as the only reference and other types of P/B slices.

An article entitled "CE8-2.2: Current picture referencing using reference index signaling", Document JVET-K0076, Joint Video Exploration Team ITU-T SG 16 WP3 and ISO/IEC JTC1/SC29/WG11, 11th Meeting: Ljubljana, IT, 10-18 July 2018 (hereinafter "JVET K0076") proposed to use dual tree with CPR.

In JVET-K0076, dual tree is used only if the current picture is the only reference frame available. When separate partition trees for luma and chroma are used, a chroma CU may be coded in CPR mode, with the corresponding chroma block vector derived from the corresponding collocated luma samples. More specifically, a chroma CU's corresponding luma samples are checked in terms of their samples coverage by the CPR mode. The following methods are proposed to handle different cases when a separate chroma coding tree is enabled:
- Full coverage: all the corresponding luma sub-blocks are coded in the CPR mode. In this case, the current chroma CU can be chosen to be coded in the CPR mode. For each chroma sub-block, its block vector is derived from its corresponding luma block's block vector, or it can be chosen from other available modes (intra, PCM, etc.), or split further.
- No coverage or partial coverage: none or only part of the corresponding luma sub-blocks is coded in the CPR mode. In this case, the current chroma CU will be coded in one of the available modes (intra mode, PCM, etc.) but not CPR mode, or split further.

In an article entitled "Current picture referencing for intra pictures", Document JVET-K0450, Joint Video Exploration Team ITU-T SG 16 WP3 and ISO/IEC JTC1/SC29/WG11, 11th Meeting: Ljubljana, IT, 10-18 July 2018 (hereinafter "JVET-K0450"), CPR is added in direct mode from Luma (DM):
- Check the prediction type of the luma blocks covering the co-located five positions of the current chroma block. The five positions are checked in the order of center (CR), top-left (TL), top-right (TR), bottom-left (BL) and bottom-right (BR).
- Scale the motion vectors (MVs) of inter luma blocks according to the resolution difference between luma and chroma. Then check if the scaled MVs is valid for current chroma block. The scale and check operations are also in the order of CR, TL, TR, BL and BR.

If an inter luma block is found and its MV is valid for the current chroma block after scaling, then the CPR mode is put into the candidate list just behind the CCLM (Cross-component linear model) modes. Otherwise, no CPR mode is added to the list. It does not change the length of the list when putting CPR mode into the list, which means a traditional intra prediction mode will be removed. Also the MV associated with the CPR mode is just the first scaled valid MV from the inter luma blocks.

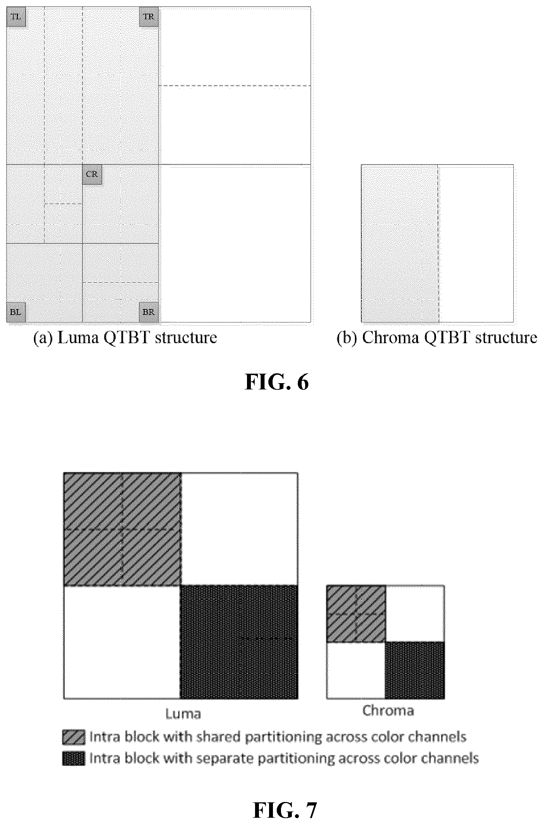

An example of a luma QTBT structure with luma sub-blocks with a separate QTBT structure with the corresponding chroma sub-blocks is illustrated in FIG. 6.

An article entitled "CE1: Shared-separate partition tree in QT+BT+TT configuration (Tests 5.3.2 and 5.4.2", Document JVET-K0354-v1, Joint Video Exploration Team ITU-T SG 16 WP3 and ISO/IEC JTC1/SC29/WG11, 11th Meeting: Ljubljana, IT, 10-18 July 2018 (hereinafter "JVET-K0354") proposed tests to evaluate the performance of enabling shared-separate partitioning trees (SST trees) for intra-coded regions in intra-slices and inter-slices, respectively.

Accordingly, in JVET-K0354, a separated shared partitioning (SST) is proposed and a block of intra samples may be partitioned into separate luma and chroma partitioning trees as illustrated in FIG. 7. In addition, indicating the use of a separate or shared partition is accomplished with a combination of inference and direct signaling. Specifically, when a coding unit has a block size greater than or equal to a thresholdA, then no selection flag is received, and a separate luma and chroma partitioning must be used for the coding unit. Alternatively, when the block size is less than or equal to a thresholdB, then the selection flag is also not received but a shared luma and chroma partitioning is employed. The drawback of the above proposition is that there is a competition between shared and separate trees, and it is only available for intra blocks.

One aspect of the present proposed technique is to improve the coding efficiency in inter slices by separating the coding trees for luma and chroma components. This separation also allows a higher degree of parallelism.

### Separation of luma and chroma coding trees in inter slices

In one embodiment, luma and chroma coding trees are separated in inter slices. In VTM-1, motion estimation and most of encoder search are already only done for luma. In a first solution, we propose to modify the syntax to separate luma and chroma information. Consequently, motion estimation is performed separately for luma and chroma components, and all modes may use only luma or the chroma components.

One potential issue with this first solution is that motion estimation will be redundant between luma and chroma, and indeed motion vectors may be very similar between luma and chroma. The additional syntax will be large too.

### Cross Component Motion Vector Prediction (CCMVP) Mode

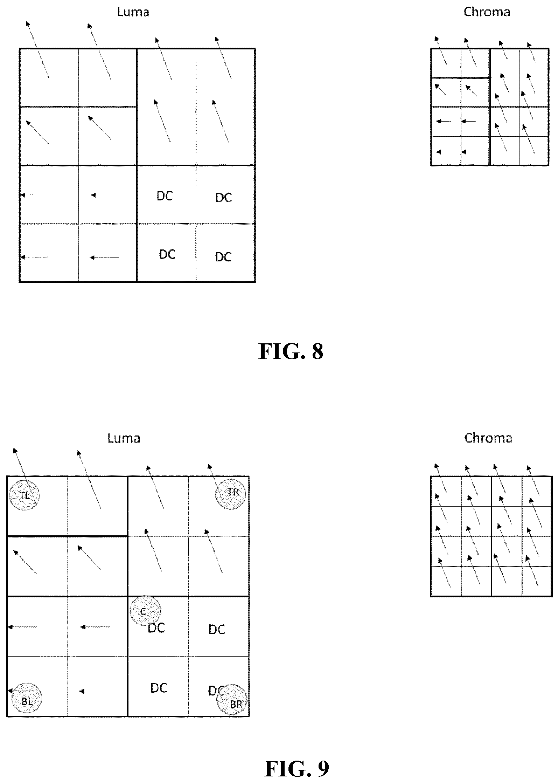

To improve the first solution described above, a new mode called "Cross Component Motion Vector Prediction" (CCMVP) may be introduced for chroma blocks in inter slices. In this new mode, for all sub-blocks of the current chroma block, motion vectors are derived from the motion vectors used in the corresponding 4x4 luma sub-blocks. Note the sub-block sizes here (4x4 for luma, 2x2 for chroma) are just for example purposes here. They can take other sizes based on the partitions and color format. For example, the luma sub-block can be 4x4 and the chroma sub-block can be 4x4 too for 4:4:4 format. If one of the sub-blocks in the collocated luma block is intra coded, a default motion vector is used for the chroma sub-block, for example, as shown in the bottom-right chroma sub-block in FIG. 8, where this default motion vector is typically the motion vector of the top-left luma sub-block. If all chroma sub-blocks of the collocated luma block are intra-coded, a null motion vector is used.

This CCMVP mode is in competition with the other modes, for example, chroma intra modes, CCLM, and DM modes, and a flag is coded in the bitstream to indicate that the CCMVP mode is used for the prediction.

### Merge mode with motion vector from luma

In another embodiment, in addition to the merge mode, we add a new chroma merge mode, with motion vector predictors from the luma component. Many positions are checked, and a list of predictors is built, for example, as illustrated in Table 1, by taking into account only inter coded sub-blocks of a luma block. As shown in Table 1, this may be, for example, in the order of using motion vector of the top-left sub block, top-right sub-block and bottom-left sub-block of a luma component with the corresponding inter coded sub-blocks.

**Table 1: Merge list with motion vector predictors from Luma**

| | |
|---|---|
| 1 | 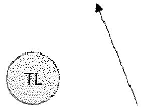 |
| 2 | 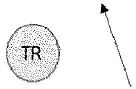 |
| 3 | 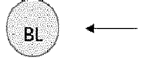 |

### Motion vectors added in direct mode list

When the coding trees are separated for luma and chroma, for a chroma block, there can be multiple sub-blocks in the collocated luma block, as illustrated in FIG. 9. For these luma sub-blocks, some can be encoded in intra modes, and some can be encoded in inter modes. Based on these modes, we can generate a list of modes, one of which is selected to encode or decode the chroma block.

For example, in the current VTM-2.0, for chroma intra coded blocks, a list of 6 modes is derived. This list is composed of directional modes (Planar, Horizontal, Vertical, DC), CCLM (Cross-component Linear model) and direct mode (intra directional prediction mode from the collocated luma block). In JEM-7.2 (or proposed in contribution JEVT-K0340), multiple direct modes are added in the intra chroma prediction modes list. If the coded trees are separated for luma and chroma, some modes from the luma may be inter coded. In this case, inter modes are not added to the intra chroma prediction modes list.

One exemplary aspect of our solution is to have a new chroma mode for direct modes, in which direct modes from intra or inter luma modes may be added. The advantage of this new mode is that intra modes and inter modes may be present in the prediction mode list (i.e., direction mode candidate list), so that the current chroma block can inherit an intra or inter mode from the prediction mode list.

For example, as shown in Table 2, we can generate a list of 4 modes, which correspond to the modes in the center (C), top-left (TL), top-right (TR), bottom-left (BL) in the luma sub-blocks. Note that the list in Table 2 can include both intra and inter modes. It should also be noted the order and the number of modes in the list in Table 2 are for example only and other orders and other numbers of modes may also be contemplated. More generally, many positions can be checked, and the list is filled with either intra luma modes or inter luma modes (e.g., composed of motion vectors and reference frame indexes).

**Table 2: Direct mode list with intra modes and motion vectors**

| | |
|---|---|
| 1 | 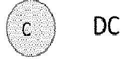 |
| 2 | 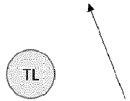 |
| 3 | 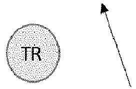 |
| 4 | 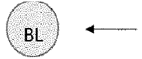 |

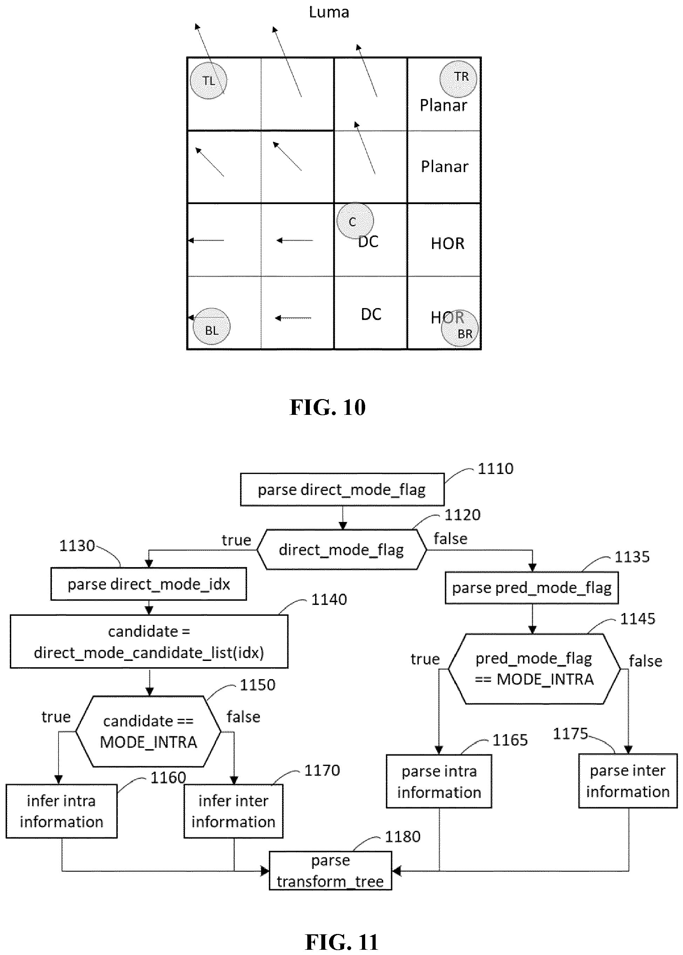

Another example of derivation of direct modes is given in Table 3, based on an example luma block as shown in FIG. 10 having the corresponding sub-blocks and prediction modes:

**Table 3: Derivation of direct modes with luma collocated block from FIG. 10**

| | | |
|---|---|---|
| 1 | 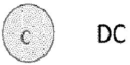 | Intra |
| 2 | 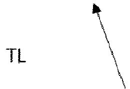 | Inter |
| 3 | 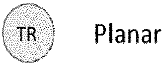 | Intra |
| 4 | 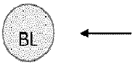 | Inter |
| 5 | 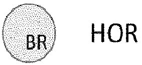 | Intra |

An intra or inter mode can be derived from the prediction list with this new direct mode for chroma, so this mode may be coded before **pred_mode_flag** syntax element, outside the loop for MODE_INTRA (i.e., encoding the intra mode) and MODE_INTER (i.e., encoding the inter mode). Using the coding_unit( ) syntax structure in VTM 3.0 as the example, the modification to the syntax is illustrated in Table 4 below (changes in italics):

**Table 4: Example of syntax with the new direct mode**

| coding_unit(x0, y0, cbWidth, cbHeight, treeType){ | **Descriptor** |
|---|---|
| if(tile_group_type != I){ | |
| if(treeType != DUAL_TREE_CHROMA){ | ae(v) |
| **cu_skip_flag**[x0][y0] | |
| }else{ | |
| ***direct_mode_flag***[x0][y0] | |
| } | |
| if(**cu_skip_flag**[x0][y0]==0 && ***direct_mode_flag***[x0][y0] == 0){ | |
| **pred_mode_flag** | ae(v) |
| }else if (***direct_mode_flag***[x0][y0] == 1){ | |
| ***direct_mode_idx***[x0][y0] | ae(v) |
| } | |
| } | |
| } | |
| if(direct_mode_flag[x0][y0] == 0){ | |
| if(CuPredMode[x0][y0] == MODE_INTRA){ | |
| ..... | |
| | |
| | |
| }else{/* MODE_INTER*/ | |
| if(cu_skip_flag[x0][y0]){ | |
| ..... | |
| } | |
| if(!pcm_flag[x0][y0]){ | |
| if(CuPredMode[x0][y0] != MODE_INTRA && cu_skip_flag[x0][y0] = = 0) | |
| **cu_cbf** | ae(v) |
| if(cu_cbf) | |
| transform_tree( x0, y0, cbWidth, cbHeight, treeType) | |
| } | |
| } | |

**direct_mode_flag**[x0][y0] equal to 1 specifies that the current chroma coding unit infers pred_mode_flag from a luma collocated block. The array indices x0, y0 specify the location (x0,y0) of the top-left luma sample of the considered coding block relative to the top-left luma sample of the picture. When direct_mode_flag[x0][y0] is not present, it is inferred to be equal to 0.

**direct_mode_idx**[x0][y0] specifies the direct mode candidate index of the direct mode candidate list where x0, y0 specify the location (x0, y0) of the top-left luma sample of the considered coding block relative to the top-left luma sample of the picture.

According to Table 4, a skip flag is parsed if the chroma components use the same coding tree as the luma; otherwise, a direct mode flag is parsed. FIG. 11 illustrates a method for parsing a chroma coding unit, according to an embodiment. First, direct_mode_flag is parsed (1110). If the flag is false (1120, direct mode is not used), pred_mode_flag is parsed (1135) and parsing of other syntax elements is performed (1145, 1165, 1175). If the direct_mode_flag is true (1120, the direct mode is used), the direct_mode_idx is parsed (1130), and this index indicates a candidate selected (1140) in the direct mode candidate list. From the direct mode candidate selected, pred_mode_flag is inferred. For example, if the candidate is intra coded (1150), pred_mode_flag is inferred to be MODE_INTRA and intra directional prediction mode is copied from the candidate (1160); if the candidate is inter coded, pred_mode_flag is inferred to be MODE_INTER and inter information (motion vectors, reference idx, uni or bi-prediction, ...) is copied from the candidate (1170). Then the transform tree syntax is parsed (1180).

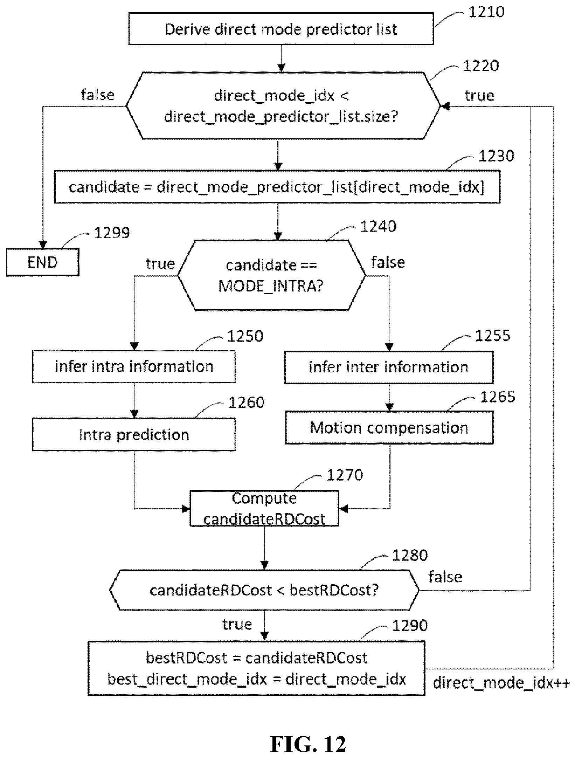

FIG. 12 illustrates a method of the encoder estimation of the chroma direct mode, according to an embodiment. At step 1210, the direct mode candidate list is derived for the current block, direct_mode_index is set to 0, best_direct_mode_idx representing the index of the best candidate in the list is set to 0, bestRDcost representing the Rate-Distortion cost of the best candidate in the list is set to a very large number (for example, ∞). For each candidate in this list (1220, 1230, 1299), if the candidate is intra coded (1240), intra prediction information is copied (1250) from the candidate to the current block (intra chroma direction), and intra prediction is processed (1260); if the candidate is inter coded (1240), inter information is copied (1255) from the candidate to the current block (motion vectors, reference_idx, uni or bi-prediction, ...) and motion compensation is performed (1265). Then Rate-Distortion cost for the current candidate is computed (1270). If the RDCost for the current candidate is lower than the bestRDCost (1280), bestRDCost value is replaced (1290) by the current candidate RDCost and best_direct_mode_idx is replaced (1290) by the current candidate index.

In the above, we describe a number of embodiments. Features of these embodiments can be provided alone or in any combination. Further, embodiments can include one or more of the following features, devices, or aspects, alone or in any combination, across various claim categories and types:
- The partitioning of the chroma component is separate from the partitioning of the luma component. The partitioning can be represented by coding trees.
- A collocated luma block that corresponds to a chroma block is partitioned into multiple luma sub-blocks. One or more sub-blocks for the collocated luma block are encoded in intra modes, and some other sub-blocks for the collocated luma block are encoded in inter modes.
- To indicate which mode is used to encode the chroma block, a list of modes is generated, where the list of modes includes 1) one or more intra prediction modes predicted from intra prediction modes of one or more sub-blocks of the collocated luma block respectively, 2) one or more motion information predicted from motion information of one or more sub-blocks of the collocated luma block respectively. Note that the intra and inter modes can be mixed in this list of modes.
- The predicted intra prediction mode(s) is selected from DC, Planar and directional intra prediction modes. The motion information includes motion vector(s), reference picture index, and/or illumination compensation parameters.
- The modes in the list of modes are ordered based on the positions of sub-blocks from which the modes are predicted from. The order of positions is known to the encoder and decoder.
- The list of modes includes an intra/inter mode from center (C) sub-block, top-left (TL) sub-block, top-right (TR) sub-block, and/or bottom-left (BL) sub-block of the collocated luma block. The inter mode refers to the motion information.
- A mode is selected from the list of modes to encode or decode the chroma block. An index of the mode in the list of modes is signaled in the bitstream.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application may be implemented in many different forms. The various figures and their associated description herewith provide some embodiments, but other embodiments are contemplated. The associated description of the figures does not limit the breadth of the exemplary implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the mode selection, intra prediction and motion compensation modules (105, 160, 170, 175, 260, 270, 275), of a video encoder 100 and decoder 200 as shown in FIG. 1 and FIG. 2. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, different block sizes or indices. The specific values are for example purposes and the aspects described are not limited to these specific values.

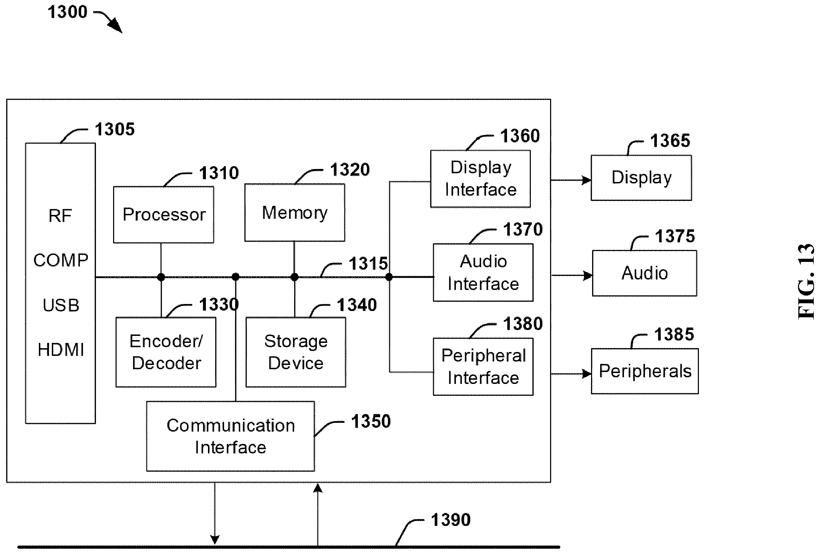

FIG. 13 illustrates a block diagram of an example of a system in which various aspects and embodiments are implemented. System 1300 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, may be embodied in a single integrated circuit, multiple ICs, and/or discrete components. For example, in at least one embodiment, the processing and encoder/decoder elements of system 1300 are distributed across multiple ICs and/or discrete components. In various embodiments, the system 1300 is communicatively coupled to other systems, or to other electronic devices, via, for example, a communications bus or through dedicated input and/or output ports. In various embodiments, the system 1300 is configured to implement one or more of the aspects described in this application.

The system 1300 includes at least one processor 1310 configured to execute instructions loaded therein for implementing, for example, the various aspects described in this application. Processor 1310 may include embedded memory, input output interface, and various other circuitries as known in the art. The system 1300 includes at least one memory 1320 (e.g., a volatile memory device, and/or a non-volatile memory device). System 1300 includes a storage device 1340, which may include non-volatile memory and/or volatile memory, including, but not limited to, EEPROM, ROM, PROM, RAM, DRAM, SRAM, flash, magnetic disk drive, and/or optical disk drive. The storage device 1340 may include an internal storage device, an attached storage device, and/or a network accessible storage device, as non-limiting examples.

System 1300 includes an encoder/decoder module 1330 configured, for example, to process data to provide an encoded video or decoded video, and the encoder/decoder module 1330 may include its own processor and memory. The encoder/decoder module 1330 represents module(s) that may be included in a device to perform the encoding and/or decoding functions. As is known, a device may include one or both of the encoding and decoding modules. Additionally, encoder/decoder module 1330 may be implemented as a separate element of system 1300 or may be incorporated within processor 1310 as a combination of hardware and software as known to those skilled in the art.

Program code to be loaded onto processor 1310 or encoder/decoder 1330 to perform the various aspects described in this application may be stored in storage device 1340 and subsequently loaded onto memory 1320 for execution by processor 1310. In accordance with various embodiments, one or more of processor 1310, memory 1320, storage device 1340, and encoder/decoder module 1330 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 1310 and/or the encoder/decoder module 1330 is used to store instructions and to provide working memory for processing that is needed during encoding or decoding. In other embodiments, however, a memory external to the processing device (for example, the processing device may be either the processor 1310 or the encoder/decoder module 1330) is used for one or more of these functions. The external memory may be the memory 1320 and/or the storage device 1340, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 1300 may be provided through various input devices as indicated in block 1305. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1305 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 1300 to other electronic devices across USB and/or HDMI connections. It is to be understood that various aspects of input processing, for example, Reed-Solomon error correction, may be implemented, for example, within a separate input processing IC or within processor 1310 as necessary. Similarly, aspects of USB or HDMI interface processing may be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 may be provided within an integrated housing, Within the integrated housing, the various elements may be interconnected and transmit data therebetween using suitable connection arrangement 1315, for example, an internal bus as known in the art, including the I2C bus, wiring, and printed circuit boards.

The system 1300 includes communication interface 1350 that enables communication with other devices via communication channel 1390. The communication interface 1350 may include, but is not limited to, a transceiver configured to transmit and to receive data over communication channel 1390. The communication interface 1350 may include, but is not limited to, a modem or network card and the communication channel 1390 may be implemented, for example, within a wired and/or a wireless medium.

Data is streamed to the system 1300, in various embodiments, using a Wi-Fi network such as IEEE 802.11. The Wi-Fi signal of these embodiments is received over the communications channel 1390 and the communications interface 1350 which are adapted for Wi-Fi communications. The communications channel 1390 of these embodiments is typically connected to an access point or router that provides access to outside networks including the Internet for allowing streaming applications and other over-the-top communications. Other embodiments provide streamed data to the system 1300 using a set-top box that delivers the data over the HDMI connection of the input block 1305. Still other embodiments provide streamed data to the system 1300 using the RF connection of the input block 1305.

The system 1300 may provide an output signal to various output devices, including a display 1365, speakers 1375, and other peripheral devices 1385. The other peripheral devices 1385 include, in various examples of embodiments, one or more of a stand-alone DVR, a disk player, a stereo system, a lighting system, and other devices that provide a function based on the output of the system 1300. In various embodiments, control signals are communicated between the system 1300 and the display 1365, speakers 1375, or other peripheral devices 1385 using signaling such as AV.Link, CEC, or other communications protocols that enable device-to-device control with or without user intervention. The output devices may be communicatively coupled to system 1300 via dedicated connections through respective interfaces 1360, 1370, and 1380. Alternatively, the output devices may be connected to system 1300 using the communications channel 1390 via the communications interface 1350. The display 1365 and speakers 1375 may be integrated in a single unit with the other components of system 1300 in an electronic device, for example, a television. In various embodiments, the display interface 1360 includes a display driver, for example, a timing controller (T Con) chip.

The display 1365 and speaker 1375 may alternatively be separate from one or more of the other components, for example, if the RF portion of input 1305 is part of a separate set-top box. In various embodiments in which the display 1365 and speakers 1375 are external components, the output signal may be provided via dedicated output connections, including, for example, HDMI ports, USB ports, or COMP outputs.

Present embodiments may include creating and/or transmitting and/or receiving and/or decoding a bitstream or signal that includes one or more of the described syntax elements, or variations thereof. The embodiments may also comprise a TV, set-top box, cell phone, tablet, or other electronic device that performs bi-prediction according to any of the embodiments described.

Present embodiments may also include a TV, set-top box, cell phone, tablet, or other electronic device that performs bi-prediction according to any of the embodiments described, and that displays (e.g. using a monitor, screen, or other type of display) a resulting image. Present embodiments may also include a TV, set-top box, cell phone, tablet, or other electronic device that tunes (e.g. using a tuner) a channel to receive a signal including an encoded image, and performs bi-prediction according to any of the embodiments described. Present embodiments may also include a TV, set-top box, cell phone, tablet, or other electronic device that receives (e.g. using an antenna) a signal over the air that includes an encoded image, and bi-prediction according to any of the embodiments described.

According to an embodiment, a method for video encoding is presented, comprising: partitioning a chroma component of a picture separately from a luma component of the picture; partitioning a collocated luma block of the luma component that corresponds to a chroma block of the chroma component into multiple luma sub-blocks; selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and encoding the chroma block based on the selected mode.

According to another embodiment, a method for video decoding is presented, comprising: partitioning a chroma component of a picture separately from a luma component of the picture; partitioning a collocated luma block of the luma component that corresponds to a chroma block of the chroma component into multiple luma sub-blocks; selecting a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and decoding the chroma block based on the selected mode.

According to another embodiment, an apparatus for video encoding is presented, comprising: means for partitioning a chroma component of a picture separately from a luma component of the picture; means for partitioning a collocated luma block of the luma component that corresponds to a chroma block of the chroma component into multiple luma sub-blocks; means for selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and means for encoding the chroma block based on the selected mode.

According to another embodiment, an apparatus for video decoding is presented, comprising: means for partitioning a chroma component of a picture separately from a luma component of the picture; means for partitioning a collocated luma block of the luma component that corresponds to a chroma block of the chroma component into multiple luma sub-blocks; means for selecting a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and means for decoding the chroma block based on the selected mode.

According to another embodiment, an apparatus for video encoding is presented, comprising one or more processors, wherein said one or more processors are configured to: partition a chroma component of a picture separately from a luma component of the picture; partition a collocated luma block of the luma component that corresponds to a chroma block of the chroma component into multiple luma sub-blocks; select a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks the collocated luma block; and encode the chroma block based on the selected motion prediction mode.

According to another embodiment, an apparatus for video decoding is presented, comprising one or more processors, wherein said one or more processors are configured to: partition a chroma component of a picture separately from a luma component of the picture; partition a collocated luma block of the luma component that corresponds to a chroma block of the chroma component into multiple luma sub-blocks; select a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and decode the chroma block based on the selected mode.

According to another embodiment, a signal comprising encoded video is formed by performing: partitioning a chroma component of a picture separately from a luma component of the picture; partitioning a collocated luma block of the luma component that corresponds to a chroma block of the chroma component into multiple luma sub-blocks; selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and encoding the chroma block based on the selected mode.

According to another embodiment, the separate partitioning of the chroma component is represented by a separate coding tree and for inter slices.

According to an embodiment, the first subset of sub-blocks is different from the second subset of sub-blocks.

According to an embodiment, intra modes and inter modes are mixed in the list of modes. An intra prediction modes is selected from DC, Planar and directional intra prediction modes, and an inter mode indicates one or more of: 1) motion vector information, 2) reference picture index, and 3) illumination compensation parameter.

According to an embodiment, modes in the list of modes are ordered based on positions of corresponding sub-blocks of the collocated luma block which the modes are predicted from.

According to an embodiment, the list of modes includes an intra or an inter mode from a center sub-block, a top-left sub-block, a top-right sub-block, and/or a bottom-left sub-block of the collocated luma block.

According to an embodiment, an index representing the selected mode in the list of modes is signaled.

Additionally, an embodiment provides a computer program comprising instructions which when executed by one or more processors cause the one or more processors to perform the encoding method or decoding method according to any of the embodiments described above. One or more of the present embodiments also provide a computer readable storage medium having stored thereon instructions for encoding or decoding video data according to the methods described above. One or more embodiments also provide a computer readable storage medium having stored thereon a bitstream generated according to the methods described above. One or more embodiments also provide a method and apparatus for transmitting or receiving the bitstream generated according to the methods described above.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for video encoding, comprising:
partitioning a chroma component of a picture separately from a luma component of the picture;
partitioning a collocated luma block of the luma component that corresponds to a chroma block of the chroma component into multiple luma sub-blocks;
selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and
encoding the chroma block based on the selected mode.

2. A method for video decoding, comprising:
partitioning a chroma component of a picture separately from a luma component of the picture;
partitioning a collocated luma block of the luma component that corresponds to a chroma block of the chroma component into multiple luma sub-blocks;
selecting a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and
decoding the chroma block based on the selected mode.

3. An apparatus for video encoding, comprising one or more processors, wherein said one or more processors are configured to:
partition a chroma component of a picture separately from a luma component of the picture;
partition a collocated luma block of the luma component that corresponds to a chroma block of the chroma component into multiple luma sub-blocks;
select a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and
encode the chroma block based on the selected mode.

4. An apparatus for video decoding, comprising one or more processors, wherein said one or more processors are configured to:
partition a chroma component of a picture separately from a luma component of the picture;
partition a collocated luma block of the luma component that corresponds to a chroma block of the chroma component into multiple luma sub-blocks;
select a mode used to decode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and
decode the chroma block based on the selected mode.

5. The method of claim 1 or 2, or the apparatus of claim 3 or 4, wherein the separate partitioning of the chroma component is represented by a separate coding tree and for inter slices.

6. The method of any one of claims 1, 2 and 5, or the apparatus of any one of claims 3-5, wherein the first subset of sub-blocks is different from the second subset of sub-blocks.

7. The method of any one of claims 1, 2, 5 and 6, or the apparatus of any one of claims 3-6, wherein the one or more respective intra prediction modes are selected from DC, Planar and directional intra prediction modes.

8. The method of any one of claims 1, 2 and 5-7, or the apparatus of any one of claims 3-7, wherein intra modes and inter modes are mixed in the list of modes.

9. The method of any one of claims 1, 2 and 5-8, or the apparatus of any one of claims 3-8, wherein each inter mode of the one or more inter modes indicates one or more of: 1) motion vector information, 2) reference picture index, and 3) illumination compensation parameter.

10. The method of any one of claims 1, 2 and 5-9, or the apparatus of any one of claims 3-9, wherein modes in the list of modes are ordered based on positions of corresponding sub-blocks of the collocated luma block which the modes are predicted from.

11. The method of any one of claims 1, 2 and 5-10, or the apparatus of any one of claims 3-10, wherein the list of modes includes an intra or an inter mode from a center sub-block, a top-left sub-block, a top-right sub-block, and/or a bottom-left sub-block of the collocated luma block.

12. The method of any one of claims 1, 2 and 5-11, or the apparatus of any one of claims 3-11, wherein an index representing the selected mode in the list of modes is signaled.

13. A bitstream, wherein the bitstream is formed by:
partitioning a chroma component of a picture separately from a luma component of the picture;
partitioning a collocated luma block of the luma component that corresponds to a chroma block of the chroma component into multiple luma sub-blocks;
selecting a mode used to encode the chroma block from a list of modes, wherein the list of modes includes 1) one or more respective intra prediction modes of one or more sub-blocks of a first subset of sub-blocks of the collocated luma block, and 2) one or more respective inter modes of one or more sub-blocks of a second subset of sub-blocks of the collocated luma block; and
encoding the chroma block based on the selected mode.

14. A non-transitory computer readable medium containing data content generated according to the method of any one of claims 1, 2 and 5-12, or the apparatus of any one of claims 3-12.

15. A computer program product comprising instructions for performing the method of any one of claims 1, 2 and 5-12 when executed by one of more processors.
